# EUROPÄISCHE PATENTANMELDUNG

(11) **EP 3 702 612 A1**
(43) Veröffentlichungstag der Anmeldung: **02.09.2020**
(21) Anmeldenummer: 19159740.0
(22) Anmeldetag: 27.02.2019
(51) Int. Cl.: F03D 7/02

(54) **VERFAHREN ZUM HALTEN EINES BEWEGLICHEN TEILS EINER WINDKRAFTANLAGE**

(71) Anmelder: B&R Industrial Automation GmbH, 5142 Eggelsberg (AT)
(72) Erfinder: Kronberger, Peter, 5023 Salzburg (AT)
(74) Vertreter: Patentanwälte Pinter & Weiss OG

(57) **Zusammenfassung**

Um an einer Windkraftanlage ein sichereres Halten eines beweglichen Teils einer Verstelleinrichtung (10) der Windkraftanlage (1) zu ermöglichen, ist vorgesehen, dass vor dem Halten die Antriebsachsen (11-1, 11-2, 11-3, 11-4) gegeneinander verspannt werden, indem zumindest eine Antriebsachse (11-1) relativ zu den anderen Antriebsachsen (11-2, 11-3, 11-4) verdreht wird, und eine zu Beginn des Haltens erreichte Verspannung der Antriebsachsen (11-1, 11-2, 11-3, 11-4) mittels einer Regelung der Antriebsachsen (11-1, 11-2, 11-3, 11-4) beibehalten wird.

## Beschreibung

Die gegenständliche Erfindung betrifft ein Verfahren zum Halten eines beweglichen Teils einer Windkraftanlage mit einer Verstelleinrichtung, wobei die Verstelleinrichtung zumindest zwei Antriebsachsen mit jeweils einem Antriebsmotor umfasst, die mechanisch mit dem beweglichen Teil gekoppelt sind, sowie eine Windkraftanlage mit einer solchen Verstelleinrichtung zum Halten eines beweglichen Teils.

Windkraftanlagen weisen in der Regel Verstelleinrichtungen für verschiedene bewegliche Teile der Windkraftanlage, wie beispielsweise eine Rotorblattverstellung oder eine Azimutverstellung, auf, um die Windkraftanlage auf wechselnde Windbedingungen (Windstärke, Windrichtung, etc.) einstellen und damit unter anderem den Energieertrag erhöhen zu können. Solche Verstelleinrichtungen weisen oftmals anstelle eines einzigen großen Antriebsmotors, mehrere kleinere zusammenwirkende Antriebsmotoren auf. Die Antriebsmotoren wirken über ein Antriebsritzel in der Regel auf einen gemeinsamen Zahnkranz, um den beweglichen Teil der Windkraftanlage zu verstellen. Der Zahnkranz ist dabei oftmals ortsfest angeordnet, beispielsweise am Turm bei einer Azimutverstellung, oder an der Nabe einer Gondel (als quasistationärer Teil) für eine Rotorblattverstellung. Die Antriebsmotoren mit dem Antriebsritzel sind am beweglichen Teil angeordnet. Diese Anordnung kann aber auch umgekehrt sein. Der bewegliche Teil und der ortsfeste Teil sind dabei über ein Lager, entweder ein Wälzlager oder ein Gleitlager, miteinander verbunden. Zwischen Antriebsmotor und Antriebsritzel ist üblicherweise auch ein Antriebsgetriebe, oftmals ein Planetengetriebe, angeordnet, das als Drehmomentenwandler fungiert, d.h. dass die hohe Drehzahl und das niedrige Drehmoment des Antriebsmotors in ein hohes Drehmoment bei niedriger Drehzahl am Antriebsritzel umgewandelt wird. Zusätzlich ist oftmals, insbesondere bei einer Wälzlagerung, auch eine Bremseinrichtung, üblicherweise eine, meistens hydraulische, Verstellbremse, vorgesehen, um den beweglichen Teil der Windkraftanlage zu bremsen oder festhalten zu können. Bei einer Gleitlagerung ist üblicherweise keine, meistens hydraulische, Bremseinrichtung vorgesehen. In der Bremseinrichtung kann ein ortsfester Bremsring vorgesehen sein, auf den am beweglichen Teil angeordnete Bremsbacken wirken. Diese Anordnung kann wiederum umgekehrt sein. Zusätzlich oder alternativ können auch die Antriebsmotoren mit Haltebremsen ausgestattet sein.

In einer Antriebsachse einer Verstelleinrichtung einer Windkraftanlage, also Antriebsmotor, gegebenenfalls Antriebsgetriebe und Verzahnung zwischen Antriebsritzel und Zahnkranz, steckt großes mechanisches Spiel und große Elastizität. Beispielsweise ist zwischen den Zähnen des Antriebsritzels und dem Zahnkranz ein Spiel im Bereich von 0,5mm und 1mm keine Seltenheit. Zusätzlich sind in der Antriebsachse große Übersetzungen vorgesehen, typischerweise in der Größenordnung von 1:20.000. Um ein Drehmoment vom Antriebsmotor auf den Zahnkranz zu übertragen muss daher zuerst das Spiel und die Elastizitäten in der Antriebsachse überwunden werden. Dafür können viele Umdrehungen der Antriebswelle des Antriebsmotors erforderlich sein.

Der bewegliche Teil der Verstelleinrichtung wird üblicherweise durch eine Verstellbremse und/oder durch Haltebremsen der Antriebsmotoren und/oder durch die wirkende Reibung in einem Gleitlager gehalten, wenn keine Verstellung benötigt wird. Aufgrund von Verschleiß in der Verstellbremse oder Haltebremse oder auch im Gleitlager, kann sich die damit erzielbare Bremswirkung zum Halten verschlechtern. Ebenso kann die Windlast so groß werden, dass die erzielbare Bremswirkung nicht ausreicht, um den beweglichen Teil zu halten. In beiden Fällen kann es bei Wind zu einem unerwünschten unkontrollierten Verdrehen des beweglichen Teils gegen die wirkende Bremswirkung kommen.

Es ist daher eine Aufgabe der gegenständlichen Erfindung ein Verfahren und eine Windkraftanlage anzugeben, die ein sichereres Halten eines beweglichen Teils einer Verstelleinrichtung ermöglicht.

Diese Aufgabe wird erfindungsgemäß dadurch gelöst, indem vor dem Halten die Antriebsachsen gegeneinander verspannt werden, indem zumindest eine Antriebsachse relativ zu den anderen Antriebsachsen gedreht wird, und eine zu Beginn des Haltens erreichte Verspannung der Antriebsachsen mittels einer Regelung der Antriebsachsen beibehalten wird. Solange die Verspannung mit der Regelung der Antriebsachsen aufrechterhalten wird, wird der bewegliche Teil gehalten. Die Antriebsachsen werden damit aktiv zum Halten des beweglichen Teils der Verstelleinrichtung eingesetzt. Durch die Regelung wird der bewegliche Teil allein durch die Antriebsachsen gehalten oder eine allfällige vorhandene Bremswirkung durch die Antriebsachsen zum Halten des beweglichen Teils unterstützt. Durch die Regelung der Antriebsachsen zum Aufrechterhalten der Verspannung wird eine auf allfälligen Verschleiß zurückgeführte Verschlechterung einer vorhandenen Bremswirkung kompensiert. Gleichfalls kann eine Verstellbremse auch kleiner dimensioniert werden, weil zumindest ein Teil der Bremswirkung zum Halten aus den Antriebsachsen bereitgestellt werden kann.

Für das Halten ist es besonders vorteilhaft, wenn die Antriebsachsen vor dem Halten nochmals nachgespannt werden, weil damit allfällige unerwünschte Veränderungen des Verspannungszustandes ausgeglichen werden, was für ein besonders gutes und sicheres Halten sorgt.

Vorteilhafterweise wird eine Positionsregelung verwendet, um die Antriebsachsen auf die Anfangspositionen zu Beginn des Haltens zu halten. Damit wird die Verspannung beibehalten. Gleichzeitig kann damit ein Verdrehen des beweglichen Teils kompensiert werden.

Um ein mögliches Verdrehen des beweglichen Teils auszugleichen kann eine Regelung der Position des beweglichen Teils verwendet werden, um auf die Anfangsposition des beweglichen Teils zu Beginn des Haltens zu regeln.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt
Fig.1 eine typische Ausführung einer Windkraftanlage,
Fig.2 eine Ausführung einer Verstelleinrichtung mit einer Antriebsachse als Windrichtungsnachführung,
Fig.3 eine Anordnung von Antriebsachsen an der Verstelleinrichtung,
Fig.4 eine Verstellung der Verstelleinrichtung zum Verdrehen des beweglichen Teils,
Fig.5 eine vorteilhafte Ausführung der Steuerung der Antriebsachsen und
Fig.6 ein Verspannen der Antriebsachsen für das Halten des beweglichen Teils.

Die gegenständliche Erfindung wird ohne Beschränkung der Allgemeinheit am Beispiel einer Azimutverstellung (Windrichtungsnachführung 7) für die Gondel 3 einer Windkraftanlage 1 beschrieben. Selbstverständlich kann die Erfindung auch bei anderen Verstelleinrichtungen für einen beweglichen Teil einer Windkraftanlage 1 angewendet werden, bei der zumindest zwei Antriebsachsen 11 vorgesehen sind, beispielsweise die Rotorblattverstellung 6 zur Verstellung der Anstellung der Rotorblätter 4.

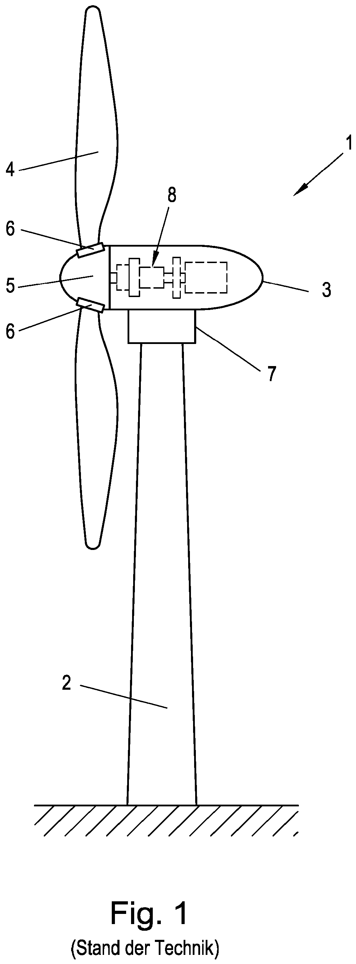

Die Fig.1 zeigt eine typische Windkraftanlage 1 mit einem ortsfesten Turm 2 auf dem die Gondel 3 angeordnet ist. An der Gondel 3 ist ein Triebstrang 8 angeordnet, in der Regel bestehend aus dem Rotor (Nabe 5 an der die Rotorblätter 4 angeordnet sind) und einem Generator, die durch Wellen miteinander verbunden sind, wobei die Welle natürlich entsprechend gelagert ist. Oftmals sind im Triebstrang 8 vor dem Generator auch ein Getriebe und eventuell auch eine Bremse vorgesehen. Der Generator wird vom Rotor angetrieben. Die Anstellung der Rotorblätter 4 ist über eine Rotorblattverstellung 6 als Verstelleinrichtung 10 verstellbar. Ebenso ist die Gondel 3 mittels einer Windrichtungsnachführung 7 als Verstelleinrichtung 10 um die Hochachse 18 des Turms 2 verdrehbar angeordnet. Die Rotorblätter 4 oder die Gondel 3 stellen damit einen beweglichen Teil der Windkraftanlage 1 dar, der bedarfsweise zu verstellen, konkret zu verdrehen, ist, beispielsweise um die Anstellung der Rotorblättern 4 in Abhängigkeit vom aktuellen Wind zu ändern, oder um die Gondel 3 der aktuellen Windrichtung nachzuführen.

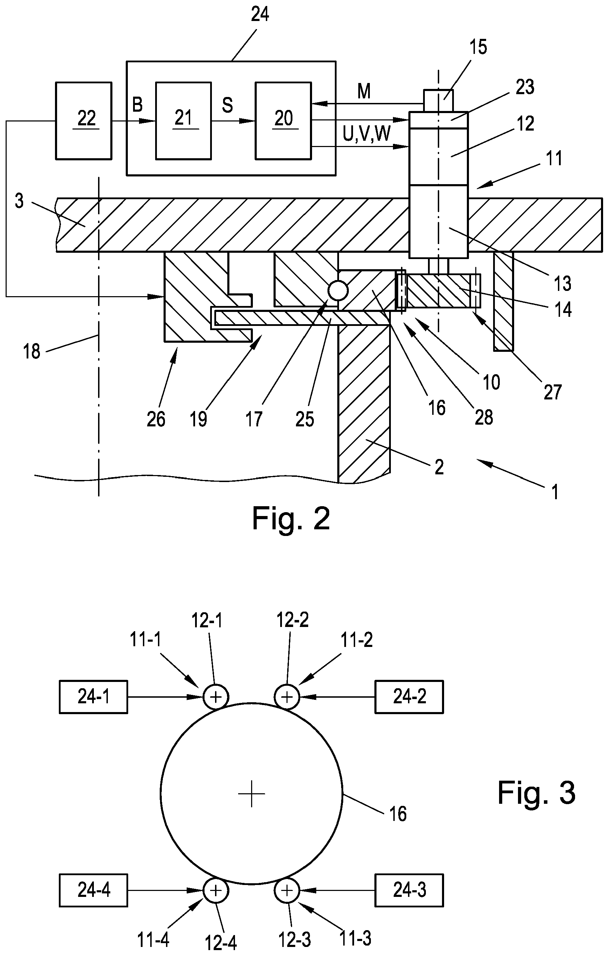

In Fig.2 ist eine erfindungsgemäße Antriebsachse 11 einer Verstelleinrichtung 10 eines beweglichen Teils einer Windkraftanlage 1 dargestellt, in diesem Fall am Beispiel einer Windrichtungsnachführung 7. Über ein Lager 17, hier ein Wälzlager, ist die Gondel 3 drehbar am Turm 2 angeordnet. Die Gondel 3 ist damit um die Hochachse 18 des Turms 2 drehbar gelagert. Weiters kann eine Verstellbremse 19 vorgesehen sein, beispielsweise mit einem ortsfesten Bremsring 25 am Turm 2 und, beispielsweise hydraulisch, betätigbare Bremszangen 26 an der Gondel 3, die mit dem Bremsring 25 zum Bremsen zusammenwirken können. Die Antriebsachse 11 ist zum Verstellen mechanisch mit dem beweglichen Teil der Windkraftanlage 1 gekoppelt, beispielsweise um den beweglichen Teil zu verdrehen. Das Lager 17 kann natürlich auch als Gleitlager ausgeführt sein und die Verstellbremse 19 kann auch entfallen.

Die Antriebsachse 11 besteht aus einem Antriebsmotor 12, der ein bewegliches Kopplungsteil 27, im gezeigten Ausführungsbeispiel ein Antriebsritzel 14, antreibt, wie in Fig.2 dargestellt. Der Antriebsmotor 12 kann ein Elektromotor sein, beispielsweise ein Asynchronmotor, wie zum Beispiel ein Käfigläufermotor, oder ein Synchronmotor, wie zum Beispiel ein Permanentmagnet erregter oder elektromagnetisch erregter Synchronmotor. Der Antriebsmotor 12 kann aber auch ein Hydraulikmotor oder ein beliebig anderer geeigneter Motor sein. Zwischen Antriebsmotor 12 und Kopplungsteil 27 (Antriebsritzel 14) ist üblicherweise auch noch ein Antriebsgetriebe 13 vorgesehen, beispielsweise ein Planetengetriebe. Das Antriebsritzel 14 wirkt zur mechanischen Kopplung mit einem ortsfest am Turm 2 angeordneten Kopplungsteil 28, im gezeigten Ausführungsbeispiel ein Zahnkranz 16 mit Außenverzahnung, zusammen. Bei Verdrehen des Antriebsritzels 14 kann folglich die Gondel 3 gegenüber dem Turm 2 verdreht werden, beispielsweise um die Gondel 3 der Windrichtung nachzuführen. Die Verstelleinrichtung 10 besteht aus zumindest zwei solchen Antriebsachsen 11, wobei jede Antriebsachse 11 auf denselben ortsfesten Kopplungsteil 28 (Zahnkranz 16) wirkt. Selbstverständlich ist diese Anordnung nur beispielhaft und kann auch beliebig anders ausgeführt sein. Beispielsweise kann der Zahnkranz mit einer Innenverzahnung ausgeführt sein. Ebenso kann der Zahnkranz 16 an der Gondel 3 angeordnet sein (also mit der Gondel mitbewegbar) und die Antriebachsen 11 ortsfest am Turm 2. Ein Antriebsmotor 12 kann auch mit einer elektrischen, pneumatischen oder hydraulischen Haltebremse 23 ausgeführt sein. Damit kann eine Antriebsachse 11 auch unabhängig von oder zusätzlich zu einer Verstellbremse 19 gehalten werden. Die konkrete Ausführung ist für die Erfindung unerheblich.

Anstelle eines Antriebsritzels 14 und eines Zahnkranzes 16 zur mechanischen Kopplung sind natürlich auch andere bewegliche Kopplungsteile 27 und ortsfeste Kopplungsteile 28 zur mechanische Kopplung zwischen der Antriebsachse 11 und dem beweglichen Teil der Windkraftanlage 1 möglich, beispielsweise Reibräder, Riemenantriebe oder Kettenantriebe, die jeweils vom Antriebsmotor 12 angetrieben werden.

Erfindungsgemäß sind zumindest zwei Antriebsachsen 11 für die Verstelleinrichtung 10 vorgesehen, beispielsweise vier Antriebsachsen 11-1, 11-2, 11-3, 11-4 wie in Fig.3 dargestellt (wobei zwecks Vereinfachung nur die Antriebsmotoren 12-1, 12-2, 12-3, 12-4 dargestellt sind).

Wie eingangs erläutert kann in einer Antriebsachse 11 großes mechanisches Spiel stecken, insbesondere das Zahnspiel zwischen Antriebsritzel 14 und Zahnkranz 16 und ein mögliches Zahnspiel im Verstellgetriebe 13 oder ein Spiel in anderen mechanischen Kopplungen, sowie eine große Elastizität auftreten, beispielsweise aufgrund der Übersetzungen und der Drehsteifigkeiten. Um eine Drehbewegung des Antriebsmotors 12 auf den beweglichen Teil der Windkraftanlage 1 übertragen zu können, müssen zuerst das Spiel und die Elastizitäten überwunden werden. Beispielsweise müssten sich zuerst alle Zahnflanken aller wirkenden Getriebe in Drehrichtung aneinanderlegen. Erst dann kann der bewegliche Teil der Windkraftanlage 1, hier die Gondel 3, von einer Antriebsachse 11 bewegt werden. Dazu können aber sehr viele Umdrehungen des Antriebsmotors 12 erforderlich sein. Das kann zu erheblichen Problemen bei der Bewegung und Ansteuerung der Verstelleinrichtung 10 führen, insbesondere weil gleichzeitig große externe, dynamische Windkräfte als Last der Verstelleinrichtung 10 wirken können.

Um dieses Problem zu beheben kann eine Positionsregelung der Antriebsachsen 11 verwendet werden. Mit der Positionsregelung einer Antriebsachse 11 wird die Winkellage des Antriebsmotors 12 geregelt. Eine Positionsregelung einer Antriebsachse 11 zeichnet sich im Wesentlichen dadurch aus, dass eine Positionsrückführung vom Antriebsmotor 12 (oder äquivalent eines anderen Teils der Antriebsachse 11) vorgesehen ist, die in einer Antriebssteuereinheit 24 (Hardware und/oder Software), beispielsweise bestehend aus einem Antriebsverstärker 20 (Hardware und/oder Software) und einer Verstellsteuereinheit 21 (Hardware und/oder Software), verarbeitet wird, um die Winkellage des Antriebsmotor 12 (oder äquivalent eines anderen Teils der Antriebsachse 11) einzustellen. Der Antriebsverstärker 20 kann dabei auch im Antriebsmotor 12 integriert sein. Zur Positionsrückführung kann am Antriebsmotor 12 ein Winkellagensensor 15 vorgesehen sein, der einen Sensorwert M als Positionsistwert liefert, anhand dessen auf den Drehwinkel des Antriebsmotors 12 rückgeschlossen werden kann. Solche Winkellagensensor 15 sind in verschiedensten Ausführungen hinlänglich bekannt, beispielsweise als Drehgeber oder Resolver. Der Antriebsverstärker 20 erzeugt die benötigten Stellgrößen für den Antriebsmotor 12, beispielsweise elektrische Versorgungen für einen elektrischen Antriebsmotor 12, beispielsweise drei Phasenspannungen U, V, W für einen dreiphasigen Elektromotor als Antriebsmotor 12, um zu jedem Zeitpunkt die gewünschte Drehbewegung zu realisieren. Für andere Arten von Antriebsmotoren 12 können natürlich andere Stellgrößen verwendet werden, beispielsweise Stellbefehle für Hydraulikventile oder für eine Hydraulikpumpe im Falle eines Hydraulikmotors. Der Antriebsverstärker 20 kann zur Positionsregelung auch Steuersignale S verarbeiten, die beispielsweise von einer Verstellsteuereinheit 21 (Hardware und/oder Software) zur Verfügung gestellt werden. Die Antriebssteuereinheit 24, oder eine Verstellsteuereinheit 21, kann wiederum von einer Anlagensteuerung 22 der Windkraftanlage 1 angesteuert werden. Die Antriebssteuereinheit 24 oder Verstellsteuereinheit 21 kann natürlich auch in der Anlagensteuerung 22 implementiert sein, beispielsweise als Software. Die Verstellsteuereinheit 21 und der Antriebsverstärker 20 können als gemeinsame Hardware implementiert sein. Ebenso ist es möglich, die Verstellsteuereinheit 21, den Antriebsverstärker 20 und die Anlagensteuerung 22 als gemeinsame Hardware zu implementieren. Ebenso können mehrere Antriebsverstärker 20 in einer gemeinsamen Hardware implementiert sein, die von einer Verstellsteuereinheit 21 angesteuert wird. In einer vorteilhaften Ausgestaltung ist eine Verstellsteuereinheit 21 vorgesehen, die zumindest einen Antriebsverstärker 20-1, 20-2, 20-3, 20-4, eine Gruppe von Antriebsverstärkern 20-1, 20-2, 20-3, 20-4 oder alle Antriebsverstärker 20-1, 20-2, 20-3, 20-4 der Antriebsachsen 11-1, 11-2, 11-3, 11-4 ansteuert. Die Antriebssteuereinheit 24-1, 24-2, 24-3, 24-4 jeder Antriebsachsen 11-1, 11-2, 11-3, 11-4 besteht dann z.B. aus derselben Verstellsteuereinheit 21 und jeweils einem Antriebsverstärker 20-1, 20-2, 20-3, 20-4. Ein Antriebsverstärker 20 oder auch eine Verstellsteuereinheit 21, oder allgemein die Antriebssteuereinheit 24, kann auch eine allfällig vorhandene Haltebremse 23 des Antriebsmotors 12 ansteuern.

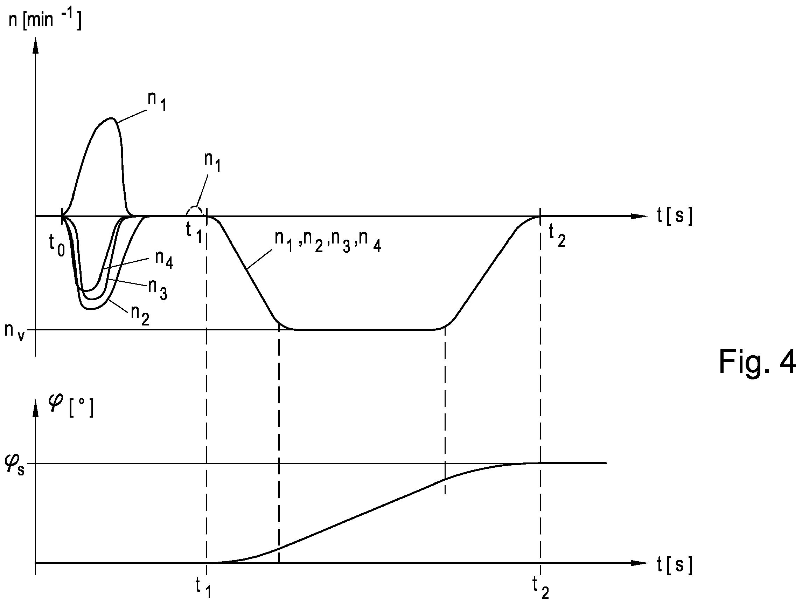

Das erfindungsgemäße Verfahren der Verstelleinrichtung 10 wird anhand der Fig.4 am Beispiel einer Verstelleinrichtung 10 mit vier Antriebsachsen 11-1, 11-2, 11-3, 11-4 (wie in Fig.3) erläutert.

Zu Beginn der Verstellung sind vorzugsweise allfällig vorhandene Haltebremsen 23 der Antriebsmotoren 12-1,12-2, 12-3, 12-4 geschlossen und eine allfällig vorhandene Verstellbremse 19 geschlossen. Zum Zeitpunkt t₀ gibt die übergeordnete Anlagensteuerung 22 den Befehl B zur Verstellung an die Antriebssteuereinheit 24-1, 24-2, 24-3, 24-4 der Antriebsachsen 11-1, 11-2, 11-3, 11-4, im beschriebenen Ausführungsbeispiel an die Verstellsteuereinheit 21, die zumindest einen Antriebsverstärker 20-1, 20-2, 20-3, 20-4 ansteuert. Daraufhin werden allfällig vorhandene und geschlossene Haltebremsen 23 als vorbereitende Handlung gelöst.

Als erster Schritt des erfindungsgemäßen Verfahrens werden die Antriebsachsen 11-1, 11-2, 11-3, 11-4 vor dem eigentlichen Verstellen, vorzugsweise im Stillstand des beweglichen Teils der Windkraftanlage 1, verspannt. Dazu wird zumindest eine Antriebsachse 11-1 relativ zu den anderen Antriebsachsen 11-2, 11-3, 11-4 verdreht. Beispielsweise kann zum Verspannen zumindest eine Antriebsachse 11-1 in die entgegengesetzte Drehrichtung der anderen Antriebsachsen 11-2, 11-3, 11-4 bewegt werden. Alternativ kann verspannt werden, indem alle Antriebsachsen 11-1, 11-2, 11-3, 11-4 in dieselbe Drehrichtung gedreht werden, wobei aber zumindest eine Antriebsachse 11-1 langsamer gedreht wird als die anderen Antriebsachsen 11-2, 11-3, 11-4, oder indem zumindest eine Antriebsachse 11-1 gehalten wird während die anderen Antriebsachsen 11-2, 11-3, 11-4 gedreht werden, vorzugsweise, aber nicht zwingend, in dieselbe Drehrichtung. Selbstverständlich können diese Möglichkeiten zum Verspannen auch kombiniert werden. Im verspannten Zustand können die Antriebsmotoren 12-1, 12-2, 12-3, 12-4 mit einem gewissen, vorgegebenen oder konfigurierten, Drehmoment nicht weiter verdreht werden, womit das Spiel und die Elastizitäten überwunden wurden. Dieses Moment ist natürlich durch die Antriebsmotoren 12-1, 12-2, 12-3, 12-4 und/oder Komponenten der Antriebsachsen 11-1, 11-2, 11-3, 11-4 begrenzt, um Beschädigungen oder Überlast zu vermeiden.

Das Verspannen kann grundsätzlich beliebig erfolgen, beispielsweise mit einer Drehzahlreglung, Drehmomentenregelung oder Positionsregelung der Antriebsachsen 11-1, 11-2, 11-3, 11-4 in der Antriebssteuereinheit 24-1, 24-2, 24-3, 24-4. Wenn für jede Antriebsachse 11-1, 11-2, 11-3, 11-4 ein gewünschtes Drehmoment zur Verspannung eingestellt werden soll, dann wird vorzugsweise eine Drehmomentenregelung verwenden, d.h. dass die Antriebsverstärker 20-1, 20-2, 20-3, 20-4 der Antriebsachsen 11-1, 11-2, 11-3, 11-4 ein gewünschtes, beispielsweise ein von der Verstellsteuereinheit 21 oder der Anlagensteuerung 22 vorgegebenes oder konfiguriertes Verspannungsmoment, einstellen. Dabei kann auch vorgesehen sein, dass das Summenmoment aller erzeugten Antriebsmomente der einzelnen Antriebsachsen 11-1, 11-2, 11-3, 11-4 nicht Null sein muss. Es kann auch ein Restmoment entgegen der gewünschten Drehrichtung des beweglichen Teils eingestellt werden, dass dann als Bremsmoment dient, um als Dämpfung gegen den extern angreifenden Wind zu wirken. Beim Verspannen werden die Antriebsachsen 11-1, 11-2, 11-3, 11-4 so lange verdreht bis das mechanische Spiel und die Elastizitäten überwunden sind, was auch mit einer Drehzahl- oder Positionsregelung erreicht werden könnte.

In Beispiel der Fig.4 sind die Drehzahlen n₁, n₂, n₃, n₄ der vier Antriebsachsen 11-1, 11-2, 11-3, 11-4 dargestellt. Es ist ersichtlich, dass die erste Antriebsachse 11-1 eine Drehzahl n₁ einstellt, die den Drehzahlen n₂, n₃, n₄ der anderen Antriebachsen 11-2, 11-3, 11-4 entgegengerichtet ist. Im verspannten Zustand können die Antriebsmotoren 12-1, 12-2, 12-3, 12-4 mit einem gewissen, vorgegebenen oder konfigurierten, Moment nicht weiter verdreht werden, weshalb die Drehzahlen n₁, n₂, n₃, n₄ der vier Antriebsachsen 11 auf Null absinken.

Im verspannten Zustand wird die allenfalls vorhandene Verstellbremse 19 gelöst, was je nach Ausführung einige Sekunden dauern kann. Hier sei angemerkt, dass das Verspannen an sich auch bei gelöster oder nicht vorhandener Verstellbremse 19 durchgeführt werden kann. Zum Zeitpunkt t₁ wird der eigentliche Verstellvorgang eingeleitet, beispielsweise von der Anlagensteuerung 22. Spätestens zu diesem Zeitpunkt wird auf eine Positionsregelung der Antriebsachsen 11-1, 11-2, 11-3, 11-4 umgestellt, vorzugsweise schon davor, beispielsweise nachdem der Verspannvorgang abgeschlossen wurde. Die Positionsregelung erfolgt so, dass die Verspannung aufrechterhalten wird. Dazu werden alle Antriebsachsen 11-1, 11-2, 11-3, 11-4 gemeinsam unter Aufrechterhaltung der Verspannung in dieselbe Drehrichtung verstellt. Dabei soll die Verspannung der Antriebsachsen 11-1, 11-2, 11-3, 11-4 vorzugsweise nicht, zumindest nicht zu stark, absinken, kann aber zunehmen. Das geschieht beispielsweise so, dass die Relativpositionen der Antriebsachsen 11-1, 11-2, 11-3, 11-4 zueinander durch die Positionsregelung unverändert aufrecht bleibt. Beim Verstellen werden die Antriebsachsen 11-1, 11-2, 11-3, 11-4 im Wesentlichen um denselben Drehwinkel in dieselbe Drehrichtung verstellt. "Im Wesentlichen" deshalb, weil aufgrund von unvermeidbaren Regelungenauigkeiten, Messungenauigkeiten, fertigungsbedingten Abweichungen in den Antriebsachsen 11-1, 11-2, 11-3, 11-4, usw., die Drehwinkel in den einzelnen Antriebsachsen 11-1, 11-2, 11-3, 11-4 üblicherweise nicht exakt übereinstimmen werden.

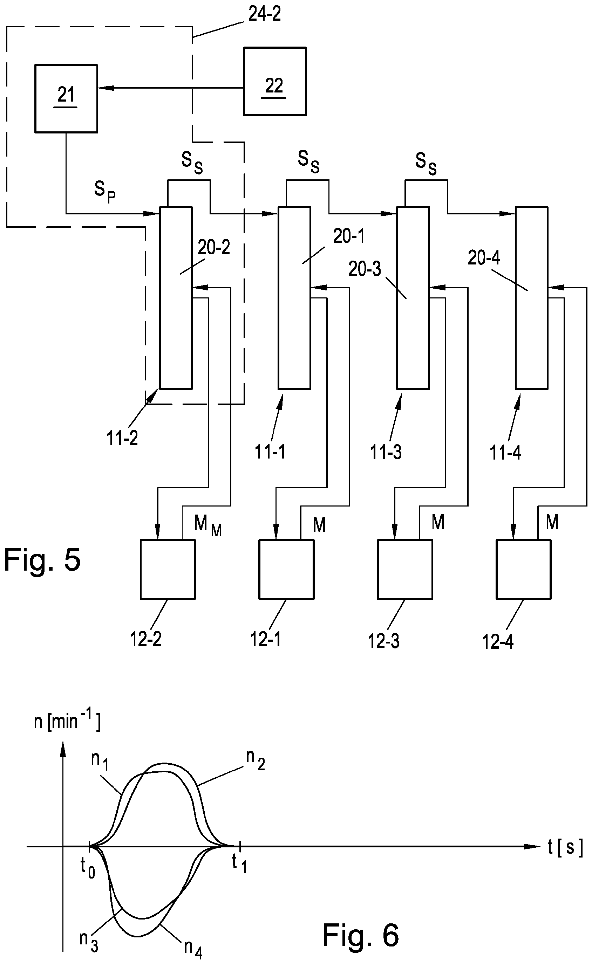

Um die Positionsregelung zu verbessern kann auch eine Master/Slave Regelung implementiert sein, die anhand der Fig.5 erläutert wird. Die Fig.5 zeigt die vier Antriebsachsen 11-1, 11-2, 11-3, 11-4 des Ausführungsbeispiels mit jeweils einem Antriebsverstärker 20-1, 20-2, 20-3, 20-4 und dem zugehörigen Antriebsmotor 12-1, 12-2, 12-3, 12-4 (weitere Komponenten des Antriebsstranges wie z.B. das Antriebsgetriebe 13 sind zur Vereinfachung nicht dargestellt). Eine Antriebsachse 11-1, 11-2, 11-3, 11-4 wird als Master-Antriebsachse 11-2 festgelegt und erhält den Positionssollwert S_{P} von der Verstellsteuereinheit 21. Die anderen Antriebsachsen 11-1, 11-3, 11-4 erhalten den jeweiligen Positionssollwert Ss vom Antriebsverstärker 20-2 der Master-Antriebsachse 11-2. Der Positionssollwert Ss, der von der Master-Antriebsachse 11-2 an die Slave-Antriebsachsen 11-1, 11-3, 11-4 weitergegeben wird ist vorteilhafterweise der mit dem Winkellagensensor 15 des Master-Antriebsmotors 12-2 erfasste Winkel-Istwert M_{M}. Damit folgen die Slave-Antriebsachsen 11-1, 11-3, 11-4 genau der Bewegung der Master-Antriebsachse 11-2. Es ist aber auch möglich, dass mehr als eine Master-Antriebsachse 11-2 vorgesehen ist, wobei jeder Master-Antriebsachse 11-2 eine Anzahl von Slave-Antriebsachsen 11-1, 11-3, 11-4 zugeordnet ist. Die Regelung jeder Master-Antriebsachse 11-2 mit ihren Slave-Antriebsachsen 11-1, 11-3, 11-4 erfolgt dann wie beschrieben.

In einer anderen Ausgestaltung kann auch der Positionssollwert S_{P} von der Verstellsteuereinheit 21 an alle Slave-Antriebsachsen 11-1, 11-3, 11-4 zum Einregeln weitergereicht werden.

Es ist auch eine Kombination denkbar, in der zumindest eine Master-Antriebsachse 11-2 mit zumindest einer Slave-Antriebsachse 11-1, 11-3, 11-4 vorgesehen sind und andere Slave-Antriebsachsen 11-1, 11-3, 11-4 direkt Positionssollwert S_{P} erhalten.

Zur Realisierung der Regelung können die Antriebsverstärker 20-1, 20-2, 20-3, 20-4 der Antriebsachsen 11-1, 11-2, 11-3, 11-4 untereinander und/oder mit der Verstellsteuereinheit 21 über einen geeigneten Kommunikationsbus, beispielsweise POWERLINK oder CAN, zur Datenkommunikation miteinander verbunden sein.

Aus den Positionssollwerten S_{P}, S_{S}, beispielsweise in Form von Drehwinkeln, und den erfassten Sensorwerten M (bzw. den daraus abgeleiteten Drehwinkeln), als Istwerte der Regelung, werden dann im Antriebsverstärker 20 anhand eines, üblicherweise als Software, implementierten Reglers (beispielsweise in PID Regler) die benötigten Stellgrößen der Regelung, beispielsweise elektrische Versorgungen U, V, W, berechnet, die benötigt werden, damit die Positionsistwerte den Positionssollwerten folgen. Anstelle von elektrischen Versorgungen kann im Antriebsverstärker 20 als Stellgröße auch eine andere Größe berechnet werden, beispielsweise ein Tastgrad oder Puls/Pausenverhältnis bei einer bekannten PWM (Pulsweitenmodulation) Steuerung, die dann im Antriebsmotor 12 selbst in elektrische Versorgungen umgerechnet wird. In diesem Fall kann die Regelung und die Leistungselektronik (zur Zurverfügungstellung der elektrischen Versorgungen) auch getrennt werden. Eine derartige Positionsregelung in einem Antrieb ist hinlänglich bekannt, weshalb nicht näher darauf eingegangen werden muss.

Zur Positionsregelung aller Antriebsachsen 11-1, 11-2, 11-3, 11-4 zur Verstellung der Verstelleinrichtung 10 wird von der Verstellsteuereinheit 21 ein Positionssollwert S_{P} vorgegeben, der von den Antriebsachsen 11-1, 11-2, 11-3, 11-4 umgesetzt wird, beispielsweise wie mit Bezugnahme auf die Fig.5 erläutert. Der Positionssollwert S_{P} entspricht dabei natürlich dem Wert der benötigt wird, um den beweglichen Teil der Windkraftanlage 1 mittels der Verstelleinrichtung 10 in die gewünschte Endposition ϕ_{S}, beispielsweise um 10° in die gewünschte Richtung, zu verdrehen.

Die Umsetzung kann wieder auf verschiedene Weise erfolgen. Beispielsweise kann im Master-Antriebsverstärker 20-2 eine Geschwindigkeitsrampe konfiguriert sein, um die Positionsvorgabe umzusetzen, z.B. wie in Fig.4 dargestellt. Dazu kann die Master-Antriebsachse 11-2 zum Zeitpunkt t₁ zuerst mit einer vorgegebenen oder konfigurierten Beschleunigung, z.B. eine maximal mögliche Beschleunigung, beschleunigt werden, bis eine vorgegebene oder konfigurierte Verstellgeschwindigkeit nᵥ erreicht wurde. Eine Slave-Antriebsachse 11-1, 11-3, 11-4 folgt dieser Masterbewegung wie oben beschrieben. Selbstverständlich könnten auch alle oder gewisse Antriebsachsen 11-1, 11-2, 11-3, 11-4 den Positionssollwert S_{P} von der Anlagensteuerung 21 erhalten und mit der gleichen Geschwindigkeitsrampe umsetzen. Anstelle einer Geschwindigkeitsrampe könnte natürlich auch jedes andere Geschwindigkeitsprofil realisiert sein. Über die konfigurierte oder vorgegebene Geschwindigkeitsrampe werden die Antriebsachsen 11-1, 11-2, 11-3, 11-4 rechtzeitig verzögert, sodass am Ende der Geschwindigkeitsrampe die gewünschte Endposition ϕ_{S}, beispielsweise ein gewünschter Drehwinkel, erreicht wird. Solche Geschwindigkeitsrampen, oder beliebige andere Geschwindigkeitsprofile, sind einfach berechenbar.

Alternativ dazu kann die Verstellsteuereinheit 21 natürlich ebenso das gewünschte Geschwindigkeitsprofil realisieren und den Antriebsverstärkern 20 in vorgegebenen Zeitschritten, beispielsweise im Millisekundenbereich, die einzustellenden Drehwinkel vorgeben. Dabei kann wieder eine Master/Slave Konfiguration implementiert sein, in der nur der Master-Antriebsverstärker 20-2 den einzustellenden Drehwinkel erhält und die Slave-Antriebsachsen 11-1, 11-3, 11-4 wieder folgen, oder es können wieder alle Antriebsverstärker 20-1, 20-2, 20-3, 20-4 die Drehwinkel von der Verstellsteuereinheit 21 erhalten.

Es ist aber auch möglich, dass die Anlagensteuerung 22 der Verstellsteuereinheit 21 (oder den Antriebsverstärkern 20-1, 20-2, 20-3, 20-4) lediglich den Befehl zur Verstellung in die gewünschte Drehrichtung gibt und die Antriebsachsen 11-1, 11-2, 11-3, 11-4 daraufhin mit einem bestimmten Geschwindigkeitsprofil beschleunigen, bis die Verstellgeschwindigkeit nᵥ erreicht wird und dann mit der Verstellgeschwindigkeit nᵥ weiterdrehen, bis die Anlagensteuerung 22 den Befehl zum Stoppen gibt. Zum Stoppen kann dann wieder ein entsprechendes Geschwindigkeitsprofil implementiert oder konfiguriert sein, beispielsweise Bremsen mit maximaler Verzögerung bis zum Stillstand. Auch das kann wieder vorzugsweise in einer Master/Slave Konfiguration der Antriebsachsen 11-1, 11-2, 11-3, 11-4 realisiert sein.

Wie in Fig.4 ersichtlich sind die Drehzahlen n₁, n₂, n₃, n₄ der Antriebsmotoren 12-1, 12-2, 12-3, 12-4 beim Verstellen mit Positionsregelung im Wesentlichen (innerhalb der erreichbaren Genauigkeit) gleich, weil im Wesentlichen dieselben Drehwinkel verstellt werden, um die Verspannung der Antriebsachsen 11-1, 11-2, 11-3, 11-4 aufrecht zu erhalten.

Zum Zeitpunkt t₂ wurden die Antriebsmotoren 12-1, 12-2, 12-3, 12-4 der Antriebsachsen 11-1, 11-2, 11-3, 11-4 in den Stillstand gebracht, womit die Verstellbewegung abgeschlossen ist.

Danach kann die Haltebremse 23 der Antriebsmotoren 12-1, 12-2, 12-3, 12-4 und/oder die Verstellbremse 19 der Verstelleinrichtung 10, sofern vorhanden, geschlossen werden.

In einer vorteilhaften Ausgestaltung der Erfindung werden vor dem eigentlichen Verstellen, also vor dem Zeitpunkt t₁, die Antriebsachsen 11-1, 11-2, 11-3, 11-4 nochmals nachgespannt. Zwischen dem anfänglichen Verspannen und dem eigentlichen Verstellen, beispielsweise während die Verstellbremse 19 geöffnet wird, kann es aufgrund der extern wirkenden Windlast zu einer unkontrollierten Verstellung der Verstelleinrichtung 10 kommen. Dadurch kann sich der Verspannungszustand in unerwünschter Weise ändern, was die nachfolgende Verstellung negativ beeinflussen kann. Um das zu verhindern kann eine Antriebsachse 11-1, oder auch mehrere oder alle Antriebsachsen 11-1, 11-2, 11-3, 11-4, nochmals nachgespannt werden, um wieder einen definierten Verspannungszustand, beispielsweise ein gewünschtes wirkendes Summenmoment, herzustellen. Im Ausführungsbeispiel nach der Fig.4 wird die erste Antriebsachse 11-1 nochmals nachgespannt, indem der Antriebsmotor 12-1 der ersten Antriebsachse 11-1 nochmals in die vorgegebene Drehrichtung aktiviert wird, bis der gewünschte Verspannungszustand erreicht wird.

Ein weiterer Vorteil der Erfindung ist darin zu sehen, dass das Halten des beweglichen Teils der Windkraftanlage 1 nur mit den Antriebsachsen 11-1, 11-2, 11-3, 11-4 der Verstelleinrichtung 10 möglich ist. Damit ist insbesondere eine Verstellbewegung trotz Wind bei vollständig offener Verstellbremse 19 der Verstelleinrichtung 10 möglich. Das kann aber auch zum Halten des beweglichen Teils der Verstelleinrichtung 10 verwendet werden, wie nachfolgend ausgeführt.

Wie bereits ausgeführt kann der bewegliche Teil durch eine Verstellbremse 19 gebremst sein und/oder durch die Reibung in einem Gleitlager als Lager 17 und/oder mittels Haltebremsen 23 in den Antriebsachsen 11-1, 11-2, 11-3, 11-4. In allen Fällen kann es passieren, dass die externe Windlast so groß wird, beispielsweise bei einem Taifun einer Offshore-Windkraftanlage, dass das aufgebrachte Bremsmoment überwunden wird und der bewegliche Teil der Windkraftanlage 1 durch den wirkenden Wind unkontrolliert verdreht wird. Das wird durch den unvermeidbaren Verschleiß in einer Verstellbremse 19 oder Haltebremse 23 noch verschlimmert, weil mit fortschreitendem Verschleiß die Bremswirkung nachlassen kann. Um dieses Problem zu beheben oder zumindest zu lindern, können die Antriebsachsen 11-1, 11-2, 11-3, 11-4 erfindungsgemäß auch zum Halten des beweglichen Teils, beispielsweise zur Bremsunterstützung, verwendet werden.

Zum Halten wird davon ausgegangen, dass die Antriebsachsen 11-1, 11-2, 11-3, 11-4 zu Beginn des Haltens zum Zeitpunkt t₁ wie oben beschrieben verspannt sind. Zum Halten ist es vorteilhaft die Antriebsachsen 11-1, 11-2, 11-3, 11-4 beim Verspannen vorzugsweise gleichmäßig aufzuteilen, also beispielsweise gleich viele Antriebsachsen 11-1, 11-2 in die eine Richtung und in die andere Richtung drehen, weil der Wind den beweglichen Teil in beide Richtungen verdrehen kann. Bei vier Antriebsachsen 11-1, 11-2, 11-3, 11-4 wie in Fig.3 würde man vorzugsweise zwei Antriebsachsen 11-1, 11-2 zum Verspannen in die eine Richtung verdrehen und die beiden anderen Antriebsachsen 11-3, 11-4 in die andere Richtung, wie in Fig.6 dargestellt. Ebenso wird man zum Halten des beweglichen Teils beim Verspannen vorzugsweise ein Summenmoment von Null einstellen.

Bei verspannten Antriebsachsen 11-1, 11-2, 11-3, 11-4 wird nun zum Halten des beweglichen Teils durch die Regelung die eingestellte Verspannung der Antriebsachsen 11-1, 11-2, 11-3, 11-4 gehalten (wieder innerhalb der möglichen Genauigkeit). Das kann vorteilhafterweise wieder mit einer Positionsregelung erfolgen, kann aber auch mit einer Drehmomentenregelung oder auch Drehzahlregelung erfolgen. Solange die Verspannung aufrecht ist wird sich der bewegliche Teil der Windkraftanlage 1 nicht bewegen. Bei der Regelung zur Aufrechterhaltung der Verspannung können sich folglich die Antriebsachsen (11-1, 11-2, 11-3, 11-4) bewegen, um eine allfällige äußere Störung der Verspannung durch den Wind, auszugleichen.

Wird die externe Kraft durch den wirkenden Wind zu groß, sodass die Verspannung durch den Wind überwunden wird, kann es jedoch zu einer Bewegung des beweglichen Teils kommen. Das Halten kann daher nur bis zu einer bestimmten Windlast sichergestellt werden, die wiederum vom eingestellten Verspannungszustand abhängig ist. Eine solche Bewegung des beweglichen Teils kann akzeptiert werden oder kann durch die Regelung wieder korrigiert werden. Beispielsweise könnte in der Antriebssteuereinheit 24-1, 24-2, 24-3, 24-4 eine übergelagerte Regelung der Position des beweglichen Teils vorgesehen sein, mit der auf die Anfangsposition des beweglichen Teils zu Beginn des Haltens geregelt wird. Diese Regelung könnte wie oben zum Verstellen des beweglichen Teils beschrieben implementiert sein.

Beispielsweise kann für jede Antriebsachse 11-1, 11-2, 11-3, 11-4 als Positionssollwert S_{P} eine Sollposition vorgegeben werden, die der Anfangsposition zu Beginn des Haltens, oder nach dem Verspannen, entspricht. Dazu kann beispielsweise jeder Antriebsachse 11-1, 11-2, 11-3, 11-4 die jeweilige Anfangsposition als Positionssollwert S_{P} vorgegeben werden. Damit werden die Antriebsachsen 11-1, 11-2, 11-3, 11-4 durch die Positionsregelung in Anfangsposition gehalten und allfällige durch Wind verursachte externe Störungen werden so ausgeregelt. Kommt es trotz der aktivierten Antriebsachsen 11-1, 11-2, 11-3, 11-4 zu einer ungewollten Verdrehung des beweglichen Teils durch den wirkenden Wind, kann durch die Positionsregelung die Anfangsposition wiederhergestellt werden und eine Verdrehung des beweglichen Teils korrigiert werden. Es könnte aber auch auf die Relativpositionen der Antriebsachsen 11-1, 11-2, 11-3, 11-4 zueinander geregelt werden, womit ein allfälliges Verdrehen des beweglichen Teils möglich wäre. Ein solches Verdrehen des beweglichen Teils könnte eine übergelagerte Regelung der Position des beweglichen Teils ausgeglichen werden.

Das Halten des beweglichen Teils kann auch bei geschlossener Verstellbremse 19 erfolgen, womit eine Unterstützung der Verstellbremse 19 realisiert wäre. Erfolgt das Halten des beweglichen Teils bei offener Verstellbremse 19 oder bei einer Verstelleinrichtung 10 ohne Verstellbremse 19 können die Antriebsachsen 11-1, 11-2, 11-3, 11-4 auch alleinig die Bremswirkung zum Halten des beweglichen Teils gegen den wirkenden Wind erzeugen.

Das Halten kann aber auch mit einer Drehzahlregelung realisiert werden. Hierzu kann beispielsweise als Sollwert eine Drehzahl von Null der Antriebsachsen 11-1, 11-2, 11-3, 11-4 vorgegeben werden, die dann von der Regelung der Antriebsachsen 11-1, 11-2, 11-3, 11-4 eingeregelt wird. Eine externe Störung durch Wind, die ein Verdrehen nach sich ziehen kann, wird damit ausgeregelt. Gleicherweise kann das mit einer Drehmomentenregelung realisiert werden, mit der ein extern auf den beweglichen Teil eingeprägtes Drehmoment ausgeregelt wird. Auch in diesen Fällen kann eine Verdrehung des beweglichen Teils durch eine Regelung ausgeglichen werden, beispielsweise durch eine übergeordnete Regelung der Position des beweglichen Teils.

Egal ob mit Positionsregelung, Drehzahlregelung oder Drehmomentenregelung ist es das Ziel des Haltens mit den Antriebsachsen 11-1, 11-2, 11-3, 11-4 den beweglichen Teil der Verstelleinrichtung 10 gegen den wirkenden Wind festzuhalten, was bis zu einer bestimmten Windlast möglich ist.

Da die Antriebsmotoren 12-1, 12-2, 12-3, 12-4 typischerweise mit einem Lüfter auf der Motorwelle gekühlt werden und sich dieser im Stillstand nicht oder bei geringen Drehzahlen nur langsam dreht, kann vorzugsweise auch die Temperatur der Antriebsmotoren 12-1, 12-2, 12-3, 12-4 überwacht werden, um eine thermische Überlastung zu vermeiden. Um die thermische Belastung der Antriebsmotoren 12-1, 12-2, 12-3, 12-4 so gering wie möglich zu halten, können die Haltebremsen 23 wieder geschlossen werden, wenn kein Regelungseingriff erforderlich ist. Ebenso ist es denkbar, eine Warnung hinsichtlich thermischer Überlastung an die Anlagensteuerung 22 und/oder die Verstellsteuereinheit 21 zu signalisieren. In diesem Fall kann das Halten der Antriebsachsen 11-1, 11-2, 11-3, 11-4 unterbrochen werden.

Zur Durchführung des Haltens der Antriebsachsen 11-1, 11-2, 11-3, 11-4 kann die Anlagensteuerung 22 einen Befehl zum Halten an die Antriebssteuereinheit 24, oder die Verstellsteuereinheit 21 der Antriebssteuereinheit 24, geben. Die Antriebssteuereinheit 24 sorgt dann für eine Verspannung der Antriebsachsen 11-1, 11-2, 11-3, 11-4, sofern sich diese nicht ohnehin schon im verspannten Zustand befinden. Die Verspannung erfolgt beispielsweise wie oben beschrieben. Nach dem Verspannen oder nach dem Erhalt des Befehls zum Halten werden beispielsweise die Anfangspositionen aller Antriebsachsen 11-1, 11-2, 11-3, 11-4 gespeichert und durch die Positionsregelung bis zu einem konfigurierten maximalen Drehmoment der Antriebsmotoren 12-1, 12-2, 12-3, 12-4, welches auch bis an das Maximalmoment des Antriebsgetriebes 13-1, 13-2, 13-3, 13-4 und/oder an das maximal zu übertragende Drehmoment heranreichen kann, gehalten.

Mit diesem Halten kann durch Verschleiß verloren gegangene Bremswirkung durch die Antriebsachsen 11-1, 11-2, 11-3, 11-4 auch kompensiert werden. Zusätzlich kann damit auch ein Bremssystem der Windkraftanlage, beispielsweise eine Verstellbremse 19, kleiner und damit kostengünstiger, ausgelegt werden.

## Patentansprüche

1. Verfahren zum Halten eines beweglichen Teils einer Windkraftanlage (1) mit einer Verstelleinrichtung (10), wobei die Verstelleinrichtung (10) zumindest zwei Antriebsachsen (11-1, 11-2, 11-3, 11-4) mit jeweils einem Antriebsmotor (12-1, 12-2, 12-3, 12-4) umfasst, die mechanisch mit dem beweglichen Teil gekoppelt sind, **dadurch gekennzeichnet, dass** vor dem Halten die Antriebsachsen (11-1, 11-2, 11-3, 11-4) gegeneinander verspannt werden, indem zumindest eine Antriebsachse (11-1) relativ zu den anderen Antriebsachsen (11-2, 11-3, 11-4) verdreht wird, **und dass** eine zu Beginn des Haltens erreichte Verspannung der Antriebsachsen (11-1, 11-2, 11-3, 11-4) mittels einer Regelung der Antriebsachsen (11-1, 11-2, 11-3, 11-4) beibehalten wird.

2. Verfahren nach Anspruch 1, **dadurch gekennzeichnet, dass** verspannt wird, indem zumindest eine Antriebsachse (11-1) in die entgegengesetzte Drehrichtung der anderen Antriebsachsen (11-2, 11-3, 11-4) gedreht wird.

3. Verfahren nach Anspruch 1, **dadurch gekennzeichnet, dass** verspannt wird, indem alle Antriebsachsen (11-1, 11-2, 11-3, 11-4) in dieselbe Drehrichtung gedreht werden, wobei zumindest eine Antriebsachse (11-1) langsamer gedreht wird als die anderen Antriebsachsen (11-2, 11-3, 11-4).

4. Verfahren nach Anspruch 1, **dadurch gekennzeichnet, dass** verspannt wird, indem zumindest eine Antriebsachse (11-1) gehalten wird während die anderen Antriebsachsen (11-2, 11-3, 11-4) gedreht werden.

5. Verfahren nach einem der Ansprüche 1 bis 4, **dadurch gekennzeichnet, dass** beim Verspannen ein Summenmoment als Summe der einzelnen Antriebsmomente der Antriebsachsen (11-1, 11-2, 11-3, 11-4) von Null eingestellt wird.

6. Verfahren nach einem der Ansprüche 1 bis 5, **dadurch gekennzeichnet, dass** eine Positionsregelung der Antriebsachsen (11-1, 11-2, 11-3, 11-4) verwendet wird, um die Antriebsachsen (11-1, 11-2, 11-3, 11-4) auf die Anfangspositionen zu Beginn des Haltens zu halten.

7. Verfahren nach einem der Ansprüche 1 bis 6, **dadurch gekennzeichnet, dass** eine Regelung der Position des beweglichen Teils verwendet wird, um auf die Anfangsposition des beweglichen Teils zu Beginn des Haltens zu regeln.

8. Verfahren nach Anspruch 1, **dadurch gekennzeichnet, dass** die Antriebsachsen (11-1, 11-2, 11-3, 11-4) vor dem Beginn des Haltens nochmals nachgespannt werden.

9. Windkraftanlage mit einer Verstelleinrichtung (10) zum Halten eines beweglichen Teils der Windkraftanlage (1), wobei die Verstelleinrichtung (10) zumindest zwei Antriebsachsen (11-1, 11-2, 11-3, 11-4) mit jeweils einem Antriebsmotor (12-1, 12-2, 12-3, 12-4) umfasst, die mechanisch mit dem beweglichen Teil gekoppelt sind, **dadurch gekennzeichnet, dass** eine Antriebssteuereinheit (24) vorgesehen ist, die zumindest eine Antriebsachse (11-1) zum Verspannen relativ zu den anderen Antriebsachsen (11-2, 11-3, 11-4) dreht, **und dass** in der Antriebssteuereinheit (24) eine Regelung implementiert ist, um die zu Beginn des Haltens eingestellte Verspannung beizubehalten.

10. Windkraftanlage nach Anspruch 9, **dadurch gekennzeichnet, dass** eine Positionsregelung der Antriebsachsen (11-1, 11-2, 11-3, 11-4) implementiert ist, die die Antriebsachsen (11-1, 11-2, 11-3, 11-4) auf die jeweilige Anfangspositionen der Antriebsmotoren (12-1, 12-2, 12-3, 12-4) der Antriebsachsen (11-1, 11-2, 11-3, 11-4) zu Beginn des Haltens regelt.

11. Windkraftanlage nach Anspruch 9 oder 10, **dadurch gekennzeichnet, dass** die Verstelleinrichtung (10) eine Windrichtungsnachführung (7) oder eine Rotorblattverstellung (6) ist.
